# EUROPEAN PATENT SPECIFICATION

(11) **EP 0 959 305 B1**
(45) Date of publication and mention of the grant of the patent: **11.08.2004**
(21) Application number: 99108687.7
(22) Date of filing: 18.05.1999
(51) Int. Cl.: F24C 15/32, A21B 3/04

(54) **Improved hot air recirculation oven**
Ofen mit Heissluftumwälzung
Four du type à circulation d'air chaud

(30) Priority: 22.05.1998 IT PD980128; 30.07.1998 IT PD980189
(43) Date of publication of application: 24.11.1999
(73) Proprietor: Unox S.p.A., 35010 Vigodarzere (Padova) (IT)
(72) Inventor: Franzolin, Enrico, 35010 Vigodarzere (Prov. of Padova) (IT); Bassan, Antonio, 35010 Vigodarzere (Prov. of Padova) (IT)
(74) Representative: Modiano, Guido, Dr.-Ing.

(56) References cited:
- EP-A- 0 653 900
- US-A- 4 984 557
- US-A- 5 662 029

## Description

The present invention relates to an improved hot air recirculation oven.

Ovens of this type are widely available on the market and are substantially constituted by a thermally insulated box-like body the inside of which can be accessed by means of a front door.

A wall is fixed transversely inside said box-like body so as to form two chambers: the larger one is meant to contain the food to be cooked or heated, while the other one is suitable to accommodate the motor of a fan.

Such fan is in fact generally fixed at the inside wall and is directly connected to the first cooking chamber in order to ensure forced recirculation of the air inside the cooking chamber.

In many configurations it is normal for the oven to have an additional dividing plate which is substantially superimposed on the fan and at which there is provided, however, a safety grille to allow air to flow and at the same time protect the user from accidental contact.

The dividing plate is normally narrower than the width of the box-like body, so that together with the body it forms lateral slots through which air flows.

Moreover this oven usually has air heating means which are usually constituted by electric resistors, gas burners or other devices and are conveniently arranged inside the second chamber.

Hot air recirculation ovens are mainly particularly appreciated and in demand because they are able to ensure better cooking of food even in maximum load conditions.

In order to bring out the taste of food it is in fact certainly advisable to use a uniform and constant distribution of the air streams inside the cooking chamber in order to cook the food practically uniformly.

However, an unpleasant drawback is unfortunately observed in these ovens, because moisture forms in the cooking chamber when cooking food due to the water that is contained in said food.

The presence of moisture degrades the quality of the cooking process, compromising the final result, so that for example it is not possible to obtain a golden brown and crispy crust; the crust instead acquires a rubbery texture.

An oven having the features comprised in the preamble of claim 1 appears to be known from US-A-5 662 029.

The aim of the present invention is to provide a hot air recirculation oven which solves the drawback noted above of conventional ovens.

In relation to this aim, an object of the present invention is to provide a hot air recirculation oven which ensures excellent temperature uniformity inside the cooking chamber and is capable of eliminating at the appropriate time the moisture that has formed therein.

Another object of the present invention is to provide an oven which is structurally very simple.

Another important object of the present invention is to provide an oven which assuredly operates in a manner which is simple and fully equivalent to the operation of conventional models.

This aim, these objects and others which will become more apparent hereinafter are achieved by an improved hot air recirculation oven according to the present invention, that has the features set forth in claim 1.

Further characteristics and advantages of the present invention will become apparent from the following detailed description of two preferred embodiments, illustrated by way of non-limitative example in the accompanying drawings, wherein:
Figure 1 is a perspective view of an improved hot air recirculation oven according to the present invention;
Figure 2 is a sectional view, taken along a longitudinal plane, of the oven of Figure 1;
Figure 3 is a sectional view, taken along a transverse plane, of the oven of Figure 1;
Figure 4 is a front view of the oven of Figure 1 in the open configuration;
Figure 5 is a perspective view of an improved hot air recirculation oven according to the present invention in a second embodiment;
Figure 6 is a sectional view, taken along a longitudinal plane, of the oven of Figure 5;
Figure 7 is an enlarged-scale sectional view of a detail of Figure 6.

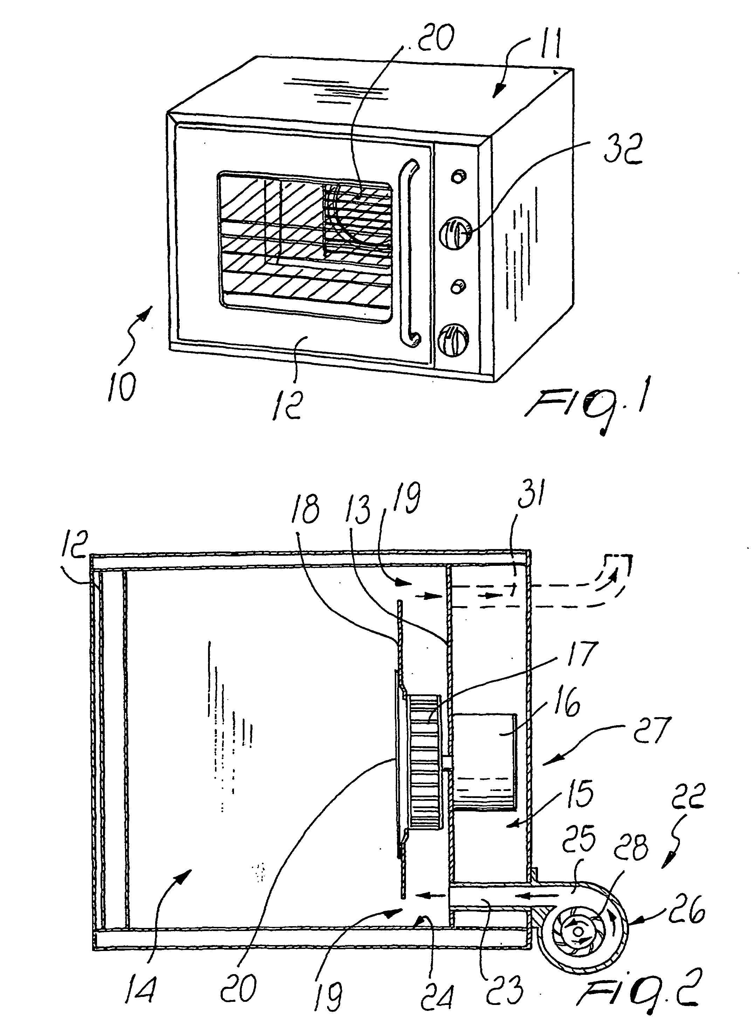

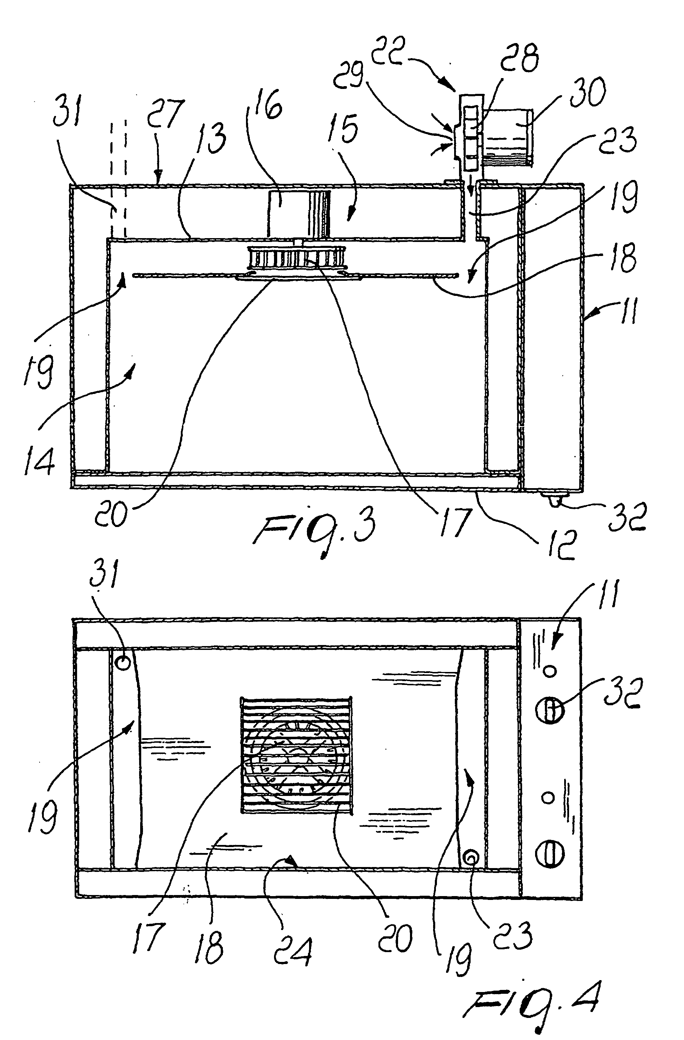

With reference to the above Figures 1 to 4, an improved hot air recirculation oven according to the present invention is generally designated by the reference numeral 10 in a first embodiment.

The oven 10 comprises a box-like body 11 which can be accessed internally by means of a front door 12.

A wall 13 is fixed transversely inside the box-like body 11 and thus forms a first chamber 14, meant for cooking or heating food, and a second chamber 15.

The motor 16 of a fan 17 for forced air recirculation is arranged inside the second chamber 15.

The fan 17, in particular, is arranged inside the first chamber 14 proximate to the wall 13 and a dividing plate 18 is frontally associated therewith.

The dividing plate is narrower than the internal dimensions of the box-like body 11 so as to form, in combination with the body, predominantly vertical lateral slots 19 which allow hot air recirculation.

In particular, the dividing plate 18 has, in the region superimposed on the fan 17, a safety grille 20 through which the air stream can flow.

The oven 10 also comprises air heating means which are arranged inside the second chamber 15 and are not illustrated in the above figures for the sake of simplicity.

Moreover the oven 10 has means for the controlled infeed of forced air, generally designated by the reference numeral 22, which comprise an inlet duct 23 which lies proximate to the bottom 24 of the oven 10.

The inlet duct 23, in particular, starts at the wall 13, at one of the lateral slots 19, so as to be directly connected to the inside of the first chamber 14, and ends at the opposite end with a delivery diffuser 25 of a centrifugal compressor 26.

The compressor, of a per se known type, is externally associated with a rear region 27 of the oven 10 and comprises an impeller 28 which is connected to an opening 29 through which air is drawn in; the impeller is conveniently actuated by a motor 30.

The oven 10, like all currently commercially available air recirculation ovens, is provided with an outlet duct 31 which starts from the wall 13 and protrudes towards and through the rear region 27 of the oven 10.

In particular, in this configuration the outlet duct 31 lies in the opposite region with respect to the inlet duct 23, so that it can be arranged proximate to the upper part of the oven 10 and at the second lateral slot 19.

In this way, the outlet duct 31 is directly connected to the inside of the first chamber 14.

The improved oven 10 is also provided with a control device, not shown in the figures for the sake of simplicity, which is connected to the centrifugal compressor 26 and can be actuated directly by a user through a knob 32 located on the front face of the oven 10.

Once the user has set the cooking time, the control device activates the centrifugal compressor 26 so that during the last stage of the cooking process, at the appropriate time, it introduces air through the inlet duct 23 directly into the first chamber 14.

In the meantime, the fumes produced by cooking and the moisture that has formed in the first chamber 14 can escape by passing through the outlet duct 31.

In this way, the moisture is conveniently decreased inside the first chamber 14 only at the most appropriate time (generally at the end of the cooking process) by means of the intervention of the control device.

The effectiveness of the oven 10 is therefore ensured by the fact that the introduction of air into the first chamber 14, determined by the control device as a function of the cooking time previously set by the user, ensures uniform cooking of the food, to the point of obtaining a crispy golden brown crust on food.

It is also particularly important to stress that the arrangement of the inlet duct 23 and of the outlet duct 31 is such as to allow immediate and complete circulation of the air fed from outside in the first chamber 14, so that the distribution is as uniform as possible.

The oven 10 can obviously be employed, if necessary, in the conventional way without introducing air into the first cooking chamber.

Conveniently, the means for the forced infeed of air, generally designated by the reference numeral 22, in fact can be actuated only when the presence of moisture in the first chamber degrades the quality of the cooking of the food, causing it to stew.

In particular, the first chamber 14 is in overpressure due to the forced infeed of air through the infeed duct 23, so that the cooking fumes can easily flow out through the outlet duct 31.

In another constructive configuration, for example, it is possible to couple suitable valve means, of a per se known type and not shown in the figures for the sake of simplicity, to the air infeed means 22, so that the air can only enter the first chamber 14 through the infeed duct 23 and flow out, after circulating and flowing along at least one complete circulatory path, only by passing through the outlet duct 31.

As an alternative to the use of the centrifugal compressor 26, in an equivalent constructive variation it is possible to use, if a lower pressure is required, a blower to be directly connected to said infeed duct 23 in order to introduce an air stream in said first chamber 14.

In particular, in this constructive variation it can be convenient to provide the infeed duct 23 with the check valve means to prevent reversal of the air stream.

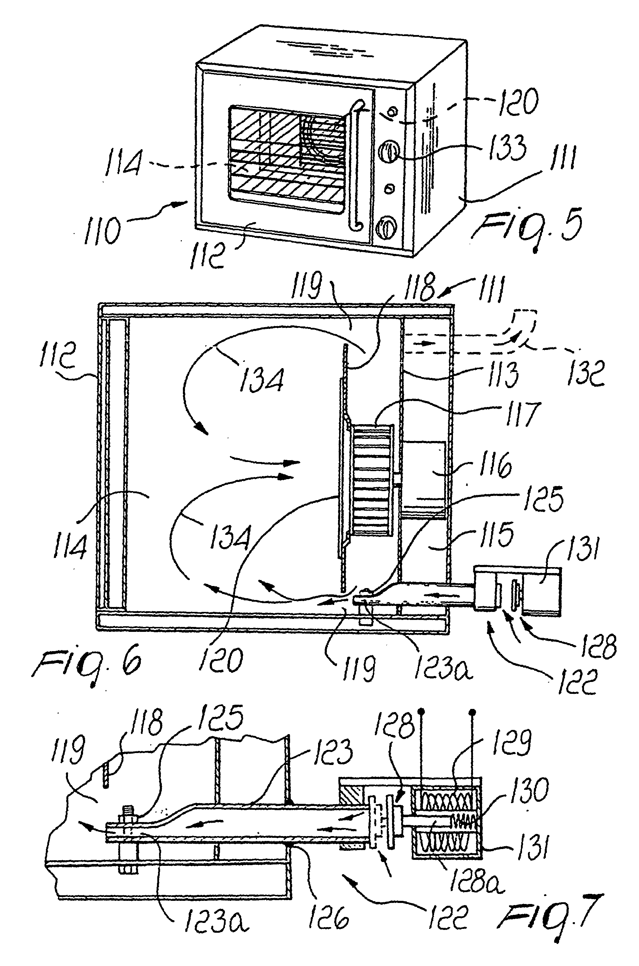

With reference now to the above Figures 5 to 7, an improved hot air recirculation oven according to the present invention is generally designated by the reference numeral 110 in a second embodiment.

The oven 110 comprises a box-like body 111 which can be accessed internally by means of a front door 112.

A wall 113 is fixed transversely inside the box-like body 111 and thus forms a first chamber 114, which is meant for cooking or heating food, and a second chamber 115.

The motor 116 of a fan 117 for forced air recirculation is arranged inside the second chamber 115.

The fan 117, in particular, is arranged inside said first chamber 114 proximate to the wall 113 and a dividing plate 118 is frontally associated therewith.

Said dividing plate is narrower than the internal dimensions of said box-like body 111, so as to form, together with said box-like body, predominantly vertical lateral slots 119 which allow hot air recirculation.

In particular, said dividing plate 118 has, in the region superimposed on the fan 117, a safety grille 120 through which the air stream can flow.

Said oven 110 also comprises air heating means which are arranged inside said second chamber 115, are not illustrated in the above figures for the sake of simplicity and are constituted for example by an electric resistor or by a gas burner.

Moreover the oven 110 has means for the controlled infeed of air by way of the negative pressure between the inside of the first chamber 114 and the atmosphere; such means are generally designated by the reference numeral 122 and comprise a pipe 123 which lies proximate to the bottom of the oven 110 between the first chamber 114 and the external rear part of the box-like body 111.

The pipe 123, in particular, lies proximate to an internal side of the first chamber 114 at one of the lateral slots 119 and is directly connected to the inside of the first chamber 114 at a portion 123a thereof which tapers with respect to the remaining part.

The pipe 123 therefore constitutes a converging duct with its tapering portion 123a.

The pipe 123 is fixed at one end with a bolt 125 which passes radially and with silicone bonding at the opposite end, at a suitable hole of the box-like body 111.

The inlet 127 of the pipe 123 is controlled by a mushroom valve 128 which is normally closed and is actuated by an inductor 129 (solenoid) which surrounds its metallic stem 128a and acts in contrast with a compression spring 130 which is arranged axially.

The assembly is contained in a box-like structure 131 which is fixed to the pipe 123 at its end.

Conveniently, the valve 128 has a disk-like gasket 128b which provides hermetic closure.

The oven 110, like all currently commercially available air recirculation ovens, has an outlet duct 132 which runs from the wall 113 towards and through the rear wall 127 of the oven 110.

In particular, in this configuration the outlet duct 132 lies in the opposite region with respect to the pipe 123 so as to be proximate to the upper part of the oven 110 and at the second lateral slot 119.

In this way, the outlet duct 132 is directly connected to the inside of the first chamber 114.

The improved oven 110 is also provided with a control device, not shown in the figures for the sake of simplicity, which is connected to the inductor and can be directly actuated by a user by means of a knob 133 arranged on the front face of the oven 110 or is provided with a control device which can be programmed electronically in order to open and close the pipe 123.

The inductor 129, when excited, generates an electromagnetic field which causes the axial translatory motion of the stem 128a of the valve 128 in contrast with the spring 130 and opens the normally closed mouth of the pipe 123.

Once the user has set the cooking time, the control device activates the inductor 129 so that during preset cooking stages, at the appropriate time, it activates the fan 117 which produces the air stream indicated by the arrows 134 of Figure 6 and therefore a negative pressure in the narrower part 123a of the pipe 123, which draws atmospheric air directly into the first chamber 114.

In the meantime, the fumes produced by cooking and the moisture formed in the first chamber 114 can escape by passing through the outlet duct 132.

This conveniently reduces the moisture inside the first chamber 114 at the most appropriate time (generally when cooking ends) thanks to the intervention of the control device.

The effectiveness of the oven 110 is therefore ensured by the fact that the infeed of air into the first chamber 114, determined by said control device as a function of the set cooking parameters, ensures uniform cooking in every point, to the point of obtaining a crispy golden brown crust on food.

It is particularly important to stress that the arrangement of the pipe 123 and of the outlet duct 132 is such as to allow immediate and complete circulation of the air fed from outside into said first chamber 114, so that its distribution is as uniform as possible and so that for example at the end of the cooking process all the moisture that is present in the cooking area is conveyed directly toward the outlet duct 132.

This eliminates the need to associate an upper extractor, hood with the oven.

In practice it has been observed that the present invention effectively achieves the intended aim and all the objects.

An important advantage of the present invention is achieved by providing an improved hot air recirculation oven which ensures excellent temperature uniformity and is at the same time capable of eliminating, at the appropriate time, the moisture that forms in the cooking chamber.

Another advantage of the present invention is certainly due to the fact that the above-described oven is structurally very simple.

It is also extremely important to stress the fact that an improved hot air recirculation oven has been devised thanks to the present invention which is capable of ensuring a very simple operation which is fully equivalent to the operation of conventional models.

The present invention is susceptible of numerous modifications and variations, all of which are within the scope of the same inventive concept.

Moreover, at the end of the cooking process, the cooked food can be cooled and dried by deactivating the heating means and changing the air inside the oven.

The oven 110 can obviously be employed in the conventional manner when necessary, without feeding air into said first cooking chamber.

The air suction means can in fact conveniently be activated only when the presence of moisture in said first chamber degrades the quality of the cooking of the food, causing it to stew.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A hot air recirculation oven comprising: a box shaped body (11) which can be accessed internally by way of a door (12); a wall (13) fixed transversely in said body (11) to form two chambers (14, 15), a first one (14) of said chambers for containing food to be cooked or heated and a second one (15) in the rear region (27) of the oven (10); at least one fan (17) for the forced recirculation of the air arranged in said first chamber (14); heating means for heating the air; slots (19) provided at said transverse wall (13) for air passage outside of, and inside said first chamber (14); air feeding means (22) for the controlled infeed of air through an air inlet duct (23) opening at said transverse wall (13) at one of said slots (19); and an air outlet duct (31) that starts from the said wall (13) at a further one of said slots, **characterized in that** said at least one fan (17) is located on the side of said first chamber (14) proximate to said transverse wall (13), a dividing plate (18) being further provided associated to said fan (17) in which said slots (19) are formed open for allowing permanent and direct, controlled infeed of outside air introduced by said air inlet duct (23) in said first chamber (14) and contemporaneous direct escape of fumes and moisture from said first chamber (14) to and through said outlet duct (31).

2. The improved hot air recirculation oven according to claim 1, **characterized in that** said means (22) for the controlled infeed of air are means for the controlled infeed of forced air which are suitable to reduce the moisture inside said first chamber (14) during cooking.

3. The oven according to claim 2, **characterized in that** said means (22) for the controlled infeed of forced air comprise a duct (23) which is connected to said first chamber (14) at one end and to the outside of said box-like body (11) at the other end, said duct (23) allowing to infeed air from outside the oven.

4. The oven according to claim 3, **characterized in that** said duct (23) is fed by a centrifugal compressor (26, 28).

5. The oven according to claim 3, **characterized in that** said duct (123) is fed by a blower (117).

6. The oven according to claim 3, **characterized in that** said infeed duct (23) runs, in the region connected to said first chamber, starting from said wall proximate to the bottom (24) of said box-like body (11).

7. The oven according to claim 3, **characterized in that** it comprises, on said infeed duct, (23, 123) check valve means which are adapted to prevent the reversal of the air stream.

8. The improved oven according to claim 1, **characterized in that** it comprises means (122) for the controlled infeed of air by negative pressure between the inside of said first chamber (114) and the atmosphere.

9. The oven according to claim 8, **characterized in that** said means (122) for the controlled infeed of air by negative pressure between the inside said first chamber (114) and the atmosphere comprise a pipe (123) which is directly connected to the inside of said first chamber (114) at a portion thereof which tapers with respect to the remaining part, the inlet of said tube (123) being controlled by a valve (128) which is actuated by actuation means (129).

10. The oven according to claim 9, **characterized in that** said actuation means comprise an inductor solenoid (129) which surrounds the metallic stem (128a) of said valve (128) and acts in contrast with an axially arranged compression spring (130).

11. The oven according to claim 8, **characterized in that** said pipe (123) runs proximate to the bottom of said oven (111) between said first chamber (114) and the outer rear part, said pipe (123) ending with said tapering portion (123a) at one of lateral slots (119) formed by a dividing plate (118) arranged inside said first chamber (114) and which is frontally associated to said fan (117) so as to laterally form said slots that cooperate with said fan (117) in order to produce said air recirculation.

## Patentansprüche

1. Heißluftumwälzofen, der umfaßt: einen kastenförmigen Körper (11), dessen Inneres mit Hilfe einer Tür (12) zugänglich ist; eine quer in diesem Körper (11) befestigte Wand (13), um zwei Kammern (14,15) zu bilden, eine erste (14) dieser Kammern zur Aufnahme von Lebensmitteln, die gekocht oder erhitzt werden sollen, und eine zweite (15) im rückwärtigen Bereich (27) des Ofens (10); wenigstens ein Gebläse (17) zur Zwangsumwälzung der Luft, angeordnet innerhalb der genannten ersten Kammer (14); Heizmittel zur Erhitzung der Luft; Schlitze (19), vorgesehen an der genannten Querwand (13) zum Luftdurchgang aus der oder in die erste Kammer (14); Luftzuführmittel (22) zur kontrollierten Zuführung der Luft durch ein Einlaßrohr (23), geöffnet an der Querwand (13) an einer der genannten Schlitze (19) und ein Luftauslaßrohr (31), das an der genannten Wand (13) an dem weiteren der genannten Schlitze beginnt,
**dadurch gekennzeichnet,**
**daß** wenigstens ein Gebläse (17) an der Seite der genannten ersten Kammer (14) in der Nähe der genannten Querwand (13) lokalisiert ist, darüber hinaus eine Trennplatte (18) benachbart zum genannten Gebläse (17) vorgesehen ist, in der die Schlitze (19) offen ausgebildet sind, um einen permanenten und direkten und kontrollierten Einlaß von Außenluft zu ermöglichen, eingebracht durch das genannte Luftzuführrohr (23) in die genannte erste Kammer (14) und gleichzeitig den direkten Auslaß von Dampf und Feuchtigkeit aus der genannten ersten Kammer (14) durch das genannte Auslaßrohr (31).

2. Heißluftumwälzofen nach Anspruch 1,
**dadurch gekennzeichnet,**
**daß** die Mittel (22) zur kontrollierten Zuführung von Luft Mittel. zur kontrollierten Zuführung von Gebläseluft sind, die geeignet sind, die Feuchtigkeit innerhalb der ersten Kammer (14) während des Kochens zu reduzieren.

3. Ofen nach Anspruch 2,
**dadurch gekennzeichnet,**
**daß** die Mittel (22) zum gesteuerten Einlaß von Gebläseluft ein Zuführrohr (23) umfassen, das mit der genannten ersten Kammer (14) an einem Ende und mit der Außenseite des kastenförmigen Körpers (11) am anderen Ende verbunden ist, wobei das Rohr (23) das Zuführen der Luft von außerhalb des Ofens erlaubt.

4. Ofen nach Anspruch 3,
**dadurch gekennzeichnet,**
**daß** das genannte Rohr (23) von einem Zentrifugalkompressor (26,28) beaufschlagt wird.

5. Ofen nach Anspruch 3,
**dadurch gekennzeichnet,**
**daß** das genannte Rohr (123) von einem Gebläse (117) beaufschlagt wird.

6. Ofen nach Anspruch 3,
**dadurch gekennzeichnet,**
**daß** das Zuführrohr (23) im Bereich verläuft, der mit der ersten Kammer verbunden ist, beginnend an der genannten Wand nahe dem Boden (24) des kastenförmigen Körpers (11).

7. Ofen nach Anspruch 3,
**dadurch gekennzeichnet,**
**daß** er an dem Zuführrohr (23,123) Absperrventilmittel aufweist, die zur Verhinderung des Rücklaufes des Luftstromes angepaßt sind.

8. Ofen nach Anspruch 1,
**dadurch gekennzeichnet,**
**daß** er Mittel (122) zur kontrollierten Zuführung von Luft mittels negativen Druckes zwischen dem Inneren der ersten Kammer (114) und der Atmosphäre aufweist.

9. Ofen nach Anspruch 8,
**dadurch gekennzeichnet,**
**daß** die genannten Mittel (122) zum gesteuerten Einlaß von Luft mittels negativen Druckes zwischen dem Innenraum der genannten ersten Kammer (114) und der Atmosphäre ein Rohr (123) umfassen, das direkt mit der genannten ersten Kammer (114) mittels eines Teiles, welches sich in bezug auf den Restteil verjüngt, verbunden ist, wobei der Einlaß dieses Rohres (123) von einem Ventil (128) kontrolliert wird, das betätigt wird durch Betätigungsmittel (129).

10. Ofen nach Anspruch 9,
**dadurch gekennzeichnet,**
**daß** die Betätigungsmittel eine magnetische Drossel (129) umfassen, die den metallischen Schaft (128a) des Ventiles (128) umgibt und die gegen eine axial angeordnete Druckfeder (130) wirkt.

11. Ofen nach Anspruch 8,
**dadurch gekennzeichnet,**
**daß** das Rohr (123) von der Nähe des Bodens des genannten Ofens (111) verläuft zwischen der ersten Kammer (114) und dem äußeren rückwärtigen Teil, wobei das genannte Rohr (123) mit dem genannten verjüngten Teil (123a) an einem der seitlichen Schlitze (119) endet, gebildet durch die Abtrennplatte (118) angeordnet im Inneren der ersten Kammer (114) und die frontal benachbart ist zu dem genannten Gebläse (117) sowie seitlich von dem genannten Schlitz, welcher zusammenwirkt mit dem genannten Gebläse (117), um eine Luftrezirkulation hervorzurufen.

## Revendications

1. Four à recirculation d'air chaud comprenant : un corps en forme de boîte (11) auquel on peut accéder par l'intérieur au moyen d'une porte (12) ; une paroi (13) fixée transversalement dans ledit corps (11) pour former deux chambres (14, 15), une première (14) desdites chambres destinée à contenir de la nourriture à cuire ou à chauffer et une seconde (15) dans la région arrière (27) du four (10) ; au moins un ventilateur (17) pour la recirculation forcée de l'air disposé dans ladite première chambre (14); des moyens de chauffage pour chauffer l'air; des fentes (19) prévues au niveau de ladite paroi transversale (13) pour le passage de l'air à l'extérieur de, et à l'intérieur de ladite première chambre (14); des moyens d'alimentation en air (22) pour l'alimentation contrôlée en air à travers un conduit d'amenée d'air (23) ouvrant au niveau de ladite paroi transversale (13) au niveau de l'une desdites fentes (19) ; et un conduit de sortie d'air (31) qui part de ladite paroi (13) au niveau d'une autre desdites fentes, **caractérisé en ce que** au moins un ventilateur (17) est situé sur le côté de ladite première chambre (14) proche de ladite paroi transversale (13), une plaque diviseuse (18) étant en outre prévue associée audit ventilateur (17), dans laquelle lesdites fentes (19) sont formées ouvertes pour permettre une amenée contrôlée permanente et directe de l'air extérieur introduit par ledit conduit d'amenée d'air (23) dans ladite première chambre (14) et l'échappement direct contemporain des fumées et de l'humidité de ladite première chambre (14) vers et à travers ledit conduit de sortie (31).

2. Four à recirculation d'air chaud selon la revendication 1, **caractérisé en ce que** lesdits moyens (22) d'alimentation contrôlée en air sont des moyens d'alimentation contrôlée en air forcé qui sont appropriés pour réduire l'humidité à l'intérieur de ladite première chambre (14) lors de la cuisson.

3. Four selon la revendication 2, **caractérisé en ce que** lesdits moyens (22) d'alimentation contrôlée en air forcé comprennent un conduit (23) qui est relié à ladite première chambre (14) à une extrémité et à l'extérieur dudit corps semblable à une boîte (11) à l'autre extrémité, ledit conduit (23) permettant d'amener de l'air depuis l'extérieur du four.

4. Four selon la revendication 3, **caractérisé en ce que** ledit conduit (23) est alimenté par un compresseur centrifuge (26, 28).

5. Four selon la revendication 3, **caractérisé en ce que** ledit conduit (123) est alimenté par un ventilateur (117).

6. Four selon la revendication 3, **caractérisé en ce que** ledit conduit d'alimentation (23) passe, dans la région reliée à ladite première chambre, à partir de ladite paroi proche du fond (24) dudit corps semblable à une boîte (11).

7. Four selon la revendication 3, **caractérisé en ce qu'**il comprend, sur ledit conduit d'alimentation (23, 123), des moyens de clapet anti-retour qui sont adaptés pour empêcher l'inversion du courant d'air.

8. Four selon la revendication 1, **caractérisé en ce qu'**il comprend des moyens (122) d'alimentation contrôlée en air par pression négative entre l'intérieur de ladite première chambre (114) et l'atmosphère.

9. Four selon la revendication 8, **caractérisé en ce que** lesdits moyens (122) d'alimentation contrôlée en air par pression négative entre l'intérieur de ladite première chambre (114) et l'atmosphère comprennent un tuyau (123) qui est directement relié à l'intérieur de ladite première chambre (114) au niveau d'une portion de celui-ci qui forme une inclinaison par rapport à la partie restante, l'entrée dudit tube (123) étant contrôlée par un clapet (128) qui est actionné par des moyens actionneurs (129).

10. Four selon la revendication 9, **caractérisé en ce que** lesdits moyens actionneurs comprennent un inducteur solénoïde (129) qui entoure la tige métallique (128a) dudit clapet (128) et agit en opposition avec un ressort de compression disposé axialement (130).

11. Four selon la revendication 8, **caractérisé en ce que** ledit tuyau (123) passe à proximité du fond dudit four (111) entre ladite première chambre (114) et la partie arrière extérieure, ledit tuyau (123) se terminant avec ladite portion inclinée (123a) au niveau de l'une des fentes latérales (119) formées par une plaque diviseuse (118) disposée à l'intérieur de ladite première chambre (114) et qui est associée au niveau frontal audit ventilateur (117) de manière à former latéralement lesdites fentes qui concourent avec ledit ventilateur (117) pour produire ladite recirculation d'air.
